Europäisches Patentamt

European Patent Office

Office européen des brevets

(11) Veröffentlichungsnummer: **0 517 021 A1**

# (12) EUROPÄISCHE PATENTANMELDUNG

(21) Anmeldenummer: **92108295.4**

(22) Anmeldetag: **16.05.92**

(51) Int. Cl.5: **B01D 53/04**, B01D 39/00

(30) Priorität: **03.06.91 DE 4118129**

(43) Veröffentlichungstag der Anmeldung:
**09.12.92 Patentblatt 92/50**

(84) Benannte Vertragsstaaten:
**DE ES FR GB IT**

(71) Anmelder: **Kimmerle, Hans-Joachim**
**Aispachstrasse 24a**
**W-7410 Reutlingen 1(DE)**

(72) Erfinder: **Kimmerle, Hans-Joachim**
**Aispachstrasse 24a**
**W-7410 Reutlingen 1(DE)**

(74) Vertreter: **Reimold, Otto, Dr. Dipl.-Phys. et al**
**Patentanwälte Dipl.-Ing. R. Magenbauer**
**Dipl.-Phys. Dr. O. Reimold Dipl.-Phys.Dr. H.**
**Vetter Dipl.-Ing. Martin Abel Hölderlinweg 58**
**W-7300 Esslingen(DE)**

(54) **Luftfilter.**

(57) Ein Luftfilter wird von einer Reihe von Geweberöhren (5) gebildet, die beidenends durch Verschlußmittel (8) verschlossen und mit pulverigem, körnigem od.dgl. Filtermaterial insbesondere mit Aktivkohle gefüllt sind. Die Geweberöhren (5) bestehen aus einem die zu reinigende Luft durchlassenden, das Filtermaterial jedoch zurückhaltenden Material. Sie sind parallel nebeneinander angeordnet und an entlang von Mantellinien verlaufenden Verbindungsstellen (11) zu einer biegbaren Filtermatte (1) fest miteinander verbunden.

Fig. 5

EP 0 517 021 A1

Die Erfindung betrifft einen Luftfilter mit einem insbesondere von Aktivkohle gebildeten Filtermaterial pulveriger, körniger od.dgl. Gestalt, das zwischen luftdurchlässigen Abdeckungen enthalten ist.

Derartige Luftfilter werden auf den verschiedensten Gebieten zur Luftreinigung benötigt, so beispielsweise bei Dunstabzugshauben, im Autobau, bei elektronischen Geräten wie Computern oder Kopiergeräten usw. Das Filtermaterial adsorbiert die in der ankommenden Luft enthaltenen Verunreinigungen, insbesondere die Geruchsstoffe, so daß die austretende Luft gereinigt ist. Ist das Adsorptionsvermögen des Filtermaterials erschöpft, muß der Filter ausgewechselt werden.

Herkömmliche Luftfilter besitzen ein das Filtermaterial aufnehmendes Kunststoffgehäuse, das an der Lufteintrittsseite und der Luftaustrittsseite geschlitzt od.dgl. ist oder durch ein vliesartiges Material abgedeckt sein kann. Derartige Luftfilter sind vor allem wegen ihres Kunststoffgehäuses verhältnismäßig teuer. Dabei ist auch zu berücksichtigen, daß je nach dem Einsatzort ein unterschiedlich gestaltetes Gehäuse erforderlich ist. Ferner bringt die Entsorgung der im Laufe der Zeit unbrauchbar gewordenen Filter Probleme mit sich, wiederum insbesondere aufgrund des aus massivem Kunststoff gefertigten Gehäuses.

Der vorliegenden Erfindung liegt deshalb die Aufgabe zugrunde, einen Luftfilter der eingangs genannten Art mit einem vereinfachten Aufbau und einer variablen Verwendung zu schaffen. Außerdem soll der Luftfilter leichter zu entsorgen sein.

Diese Aufgabe wird erfindungsgemäß dadurch gelöst, daß der Luftfilter von einer Reihe von beidenends durch Verschlußmittel verschlossenen und mit dem Filtermaterial befüllten Geweberöhren aus einem die Luft durchlassenden, das Filtermaterial jedoch zurückhaltenden Material gebildet wird, die parallel nebeneinander angeordnet und entlang von Mantellinien zu einer biegbaren Filtermatte fest miteinander verbunden sind.

Somit ist kein massiver Kunststoff mehr vorhanden. Bei dem erfindungsgemäßen Luftfilter wird das Filtermaterial durch die Geweberöhren an Ort und Stelle gehalten, die sich ohne besondere Schwierigkeiten mit wenig Materialaufwand herstellen lassen, so daß sich eine verhältnismäßig leichtgewichtige Filtermatte ergibt. Dementsprechend stellt ein verbrauchter Filter eine geringere Abfallmenge als seither dar. Des weiteren bilden die entlang von Mantellinien verlaufenden Verbindungsstellen, über die die Geweberöhren aneinanderhängen, sozusagen Gelenkstellen, so daß benachbarte Geweberöhren relativ zueinander verschwenkbar sind und die Filtermatte somit insgesamt flexibel ist und deshalb nicht nur in planer Lage sondern auch mit bogenförmigem Verlauf od.dgl. eingesetzt werden kann.

Ein weiterer Vorteil besteht darin, daß das insgesamt für das Filtermaterial vorhandene Volumen in die einzelnen Geweberöhren unterteilt ist, so daß das Filtermaterial innerhalb der Filtermatte, beispielsweise im Falle einer Lageänderung der Filtermatte, nicht unerwünscht verrutschen kann sondern in gleichmäßiger Verteilung an Ort und Stelle bleibt.

Außerdem kann man aus mehreren gleichen Filtermatten, die flächig aufeinandergelegt werden, einen Filter mit entsprechend erhöhter Filterwirkung erhalten. Auch eine Kombination mit Filterschichten aus anderen Filtermaterialien ist möglich.

Zweckmäßigerweise sind die Geweberöhren miteinander verwoben, so daß die Gesamtheit der Geweberöhren von einem einstückigen, beiderseits der Verwebungsstellen doppellagigen Gewebekörper gebildet wird. Ein solcher Gewebekörper läßt sich maschinell in Serienfertigung herstellen. Dabei kann er praktisch mit beliebigen Abmessungen gefertigt werden, wonach man das für den jeweiligen Filter benötigte Stück abschneidet.

Im wesentlichen die gleichen Vorteile sind bei der alternativ möglichen Vorgehensweise vorhanden, daß die Gesamtheit der Geweberöhren von zwei übereinander angeordneten Gewebelagen gebildet wird, die im dem Durchmesser der Geweberöhren entsprechenden Abstand linienartig, insbesondere durch eine Naht oder durch Verkleben, miteinander verbunden sind.

Die Geweberöhren sind mit möglichst viel Filtermaterial gefüllt. Dies ergibt die weitere zweckmäßige Ausgestaltung, daß die Geweberöhren im befüllten Zustand eine im wesentlichen zylindrische Gestalt aufweisen.

Prinzipiell könnte man die Geweberöhren auch aus einem Drahtgewebe herstellen. Dies wäre jedoch sehr teuer. Günstiger ist deshalb ein textiles Gewebe und dabei insbesondere ein aus Naturfasern bestehendes Gewebe. Naturfasern weisen gegenüber Kunstfasern zunächst den Vorteil einer größeren Flexibilität auf. Vor allem aber stellen aus Naturfasern stehende Geweberöhren keinen Sondermüll dar, so daß die Entsorgung völlig problemlos ist.

Eine weitere zweckmäßige Ausgestaltung ist dadurch gekennzeichnet, daß die Verschlußmittel von in die Geweberöhren eingesteckten Stopfen gebildet werden. Solche eingesteckten Stopfen tragen gleichzeitig zur Formstabilität der Geweberöhren bei, da sie dem Röhrenmaterial von innen her Halt geben. Die Stopfen können zusätzlich mit den Geweberöhren verklebt sein.

Die Stopfen können zweckmäßigerweise voneinander unabhängige Einzelstopfen sein.

Es ist jedoch auch möglich, daß mindestens an einer Filterseite die Stopfen an einer sich über die Enden der Geweberöhren erstreckenden Stopfenleiste angeordnet sind. An der Seite, über die die Geweberöhren befüllt werden, ist jedoch die Verwendung von Einzelstopfen günstiger.

Der problemlosen Entsorgung wegen sollten auch die Verschlußmittel aus einem Naturstoff, es kommen beispielsweise Naturfasern oder pappeartiges Material od.dgl. in Frage, bestehen. Zusammen mit der erwähnten Herstellung der Geweberöhren aus Naturfasern ergibt sich dann eine insgesamt nur aus Naturstoffen bestehende Filtermatte.

Die Halterung der Filtermatte kann in verschiedener Weise erfolgen. Eine in Zusammenhang mit der Röhrenform stehende Möglichkeit besteht darin, daß man mindestens eine Geweberöhre ungefüllt und unverschlossen läßt, so daß ein die Filtermatte haltender Haltestift od.dgl. eingesteckt werden kann.

Ein Ausführungsbeispiel der Erfindung wird nun anhand der Zeichnung erläutert. Es zeigen:

Fig. 1     eine erfindungsgemäße Filtermatte in schematischer Schrägansicht,

Fig. 2     eine der die Filtermatte bildenden, mit Filtermaterial gefüllten und endseitig verschlossenen Geweberöhren im Längsschnitt,

Fig. 3     eine als Alternative zu Einzelstopfen verwendbare Stopfenleiste zum Verschließen der an einer Filterseite angeordneten Röhrenenden in Vorderansicht auf die die Stopfenreihe aufweisende Flachseite,

Fig. 4     die Stopfenleiste nach Fig. 3 in Draufsicht gemäß Pfeil IV in Fig. 3,

Fig. 5     die Filtermatte nach Fig. 1 in gebogenem Zustand in Stirnansicht,

Fig. 6     das die Gesamtheit der Geweberöhren ergebende Gebilde aus Gewebematerial vor dem Befüllen in der Fig. 5 entsprechender Stirnansicht und

Fig. 7     die Anordnung nach Fig. 6 in Draufsicht.

Die Filtermatte 1 dient zum Filtern von Luft und enthält hierzu ein insbesondere von Aktivkohle gebildetes Filtermaterial 2 pulveriger, körniger od.dgl. Gestalt. Beim Gebrauch wird sie imn Strömungsweg der Luft angeordnet, die im ungereinigten Zustand in Richtung gemäß Pfeil 3 auf die eine Filtermatten-Flachseite trifft, die Filtermatte 1 bzw. deren Filtermaterial 2 durchströmt und in gereinigtem Zustand an der anderen Filtermatten-Flachseite in Richtung gemäß Pfeil 4 austritt. Die Verunreinigungen, vor allem Geruchsstoffe, werden von der Aktivkohle adsorbiert.

Die Filtermatte 1 wird von einer Mehrzahl von Geweberöhren 5 gebildet, die aus einem die Luft durchlassenden, das Filtermaterial 2 jedoch zurückhaltenden Material mit einer entsprechenden Maschen- oder Porengröße bestehen. Hierzu wird ein textiles Gewebe insbesondere aus Naturfasern verwendet. Die Geweberöhren 5 sind parallel nebeneinander angeordnet und entlang von Mantellinien aneinander angesetzt, so daß sich eine Reihe von Geweberöhren 5 ergibt, bei der die Röhren quer zur Richtung der Reihe ausgerichtet sind. Die Geweberöhren 5 sind ferner alle gleich lang, so daß die Filtermatte 1 eine Rechteckgestalt besitzt, deren Breite B sich aus der Anzahl der Geweberöhren 5 multipliziert mit dem Röhrendurchmesser zuzüglich der evtl. vorhandenen kurzen Gewebe-Endstücke 6,7 ergibt, während die Länge L der Filtermatte 1 gleich der Röhrenlänge ist.

Anstelle lauter gleich langer Geweberöhren könnte man die Geweberöhren prinzipiell auch unterschiedlich lang machen, so daß sich eine von der Rechteckgestalt abweichende Filtermattengestalt ergeben würde. Dies richtet sich nach der Formgebung des Gerätes, innerhalb von dem der von der Filtermatte 1 gebildete Luftfilter eingesetzt werden soll. Die Rechteckgestalt ist jedoch vorteilhaft, da man die rechteckige Filtermatte am Umfang möglichst dicht am Gerät anliegen lassen kann, so daß keine Luft an der Filtermatte vorbeiströmen kann.

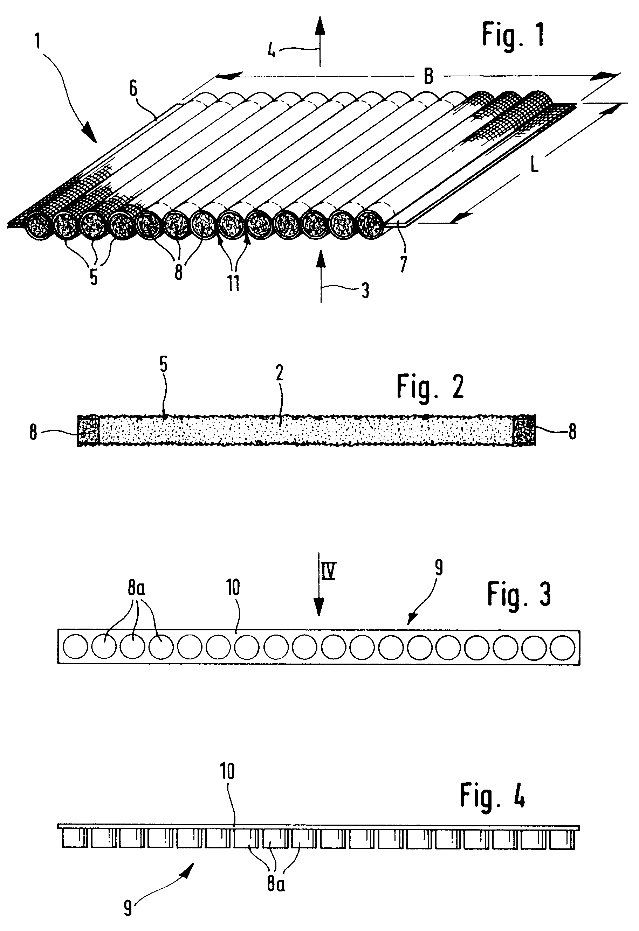

Die Geweberöhren 5 sind jeweils mit dem Filtermaterial 2 befüllt und an ihren beiden Enden durch Verschlußmittel verschlossen, so daß das Filtermaterial 2 an Ort und Stelle bleibt. Die Verschlußmittel werden beim bevorzugten Ausführungsbeispiel von in die Geweberöhren 5 eingesteckten Stopfen 8 (Fig. 1,2 und 5) bzw. 8a (Fig. 3 und 4) gebildet.

Im unbefüllten Zustand sind die Geweberöhren 5 forminstabil. Sie erhalten ihre Röhrenform durch das eingefüllte Filtermaterial 2 und vor allem durch die endseitig eingesteckten Stopfen 8 bzw. 8a. Im befüllten Zustand ergibt sich dann eine im wesentlichen zylindrische Gestalt. Bei der Herstellung wird so vorgegangen, daß die Geweberöhren 5 zunächst an einer Seite verschlossen werden, wonach man das Filtermaterial 2 einfüllt und sodann die entgegengesetzten Röhrenenden verschließt. Dabei wird auf eine möglichst dichte Befüllung geachtet, so daß möglichst viel Filtermaterial 2 enthalten ist und das Filtermaterial nicht verrutschen kann.

Im Falle der Fig. 1,2 und 5 handelt es sich bei den Stopfen 8 um Einzelstopfen, die mit den benachbarten Stopfen nicht verbunden sind. Man kann jedoch auch eine Stopfenleiste 9 (Fig. 3 und 4) vorsehen, bei der die Stopfen 8a in einer Reihe von einem Leistenkörper 10 abstehen. Die Stopfen 8a sind also über den Leistenkörper 10 miteinander verbunden und werden an der betreffenden Seite der Filtermatte in die zugewandten Röhrenenden eingesteckt. Die Stopfenleiste 9 bzw. deren Leistenkörper erstreckt sich dann über die Enden der Geweberöhren 5. Dabei verläuft die Stopfenleiste 9 zweckmäßigerweise über die gesamte Breite B der Filtermatte 1. Sie läßt sich sozusagen als Endlosleiste herstellen, von der man dann die für die betreffende Filtermatte benötigte Länge abschneidet.

Im Falle der Stopfenleiste 9 ist es günstiger, nur an einer Seite der Filtermatte eine Stopfenleiste zu verwenden, und zwar an der Seite, an der die Geweberöhren zuerst verschlossen werden, und an der entgegengesetzten Seite nach dem Befüllen Einzelstopfen 8 einzustecken.

Die Stopfen bzw. die Stopfenleiste können prinzipiell aus beliebigem Material bestehen. Bevorzugt wird jedoch ein Naturstoff verwendet, wobei die Verschlußmittel insbesondere aus Naturfasern, auch pappeartiges Material od.dgl. kommt in Frage, bestehen. Beim Ausführungsbeispiel handelt es sich bei den Einzelstopfen 8 um watteartiges Material.

Die Stopfen sind, um ihren Halt in den Geweberöhren zu stabilisieren, mit diesen noch verklebt.

Fertigt man sowohl die Geweberöhren 5 als auch die Verschlußmittel 8 bzw. 9 aus einem Naturstoff, ist der gesamte Luftfilter (auch Aktivkohle ist ein Naturprodukt) recyclebar und somit problemlos zu entsorgen, wenn er ausgetauscht werden muß.

Die Filtermatte 1 wird an der Stelle des jeweiligen Gerätes, wo die Luft gefiltert werden soll, in geeigneter Weise gehalten. Hierzu kann man neben den üblichen Möglichkeiten beispielsweise einer rahmenartigen Halterung auch die eine oder andere der Geweberöhren 5 verwenden, wenn man sie ungefüllt und unverschlossen läßt. In eine solche Geweberöhre, die ja endseitig offen ist, kann man dann einen Haltestift od.dgl. einstecken.

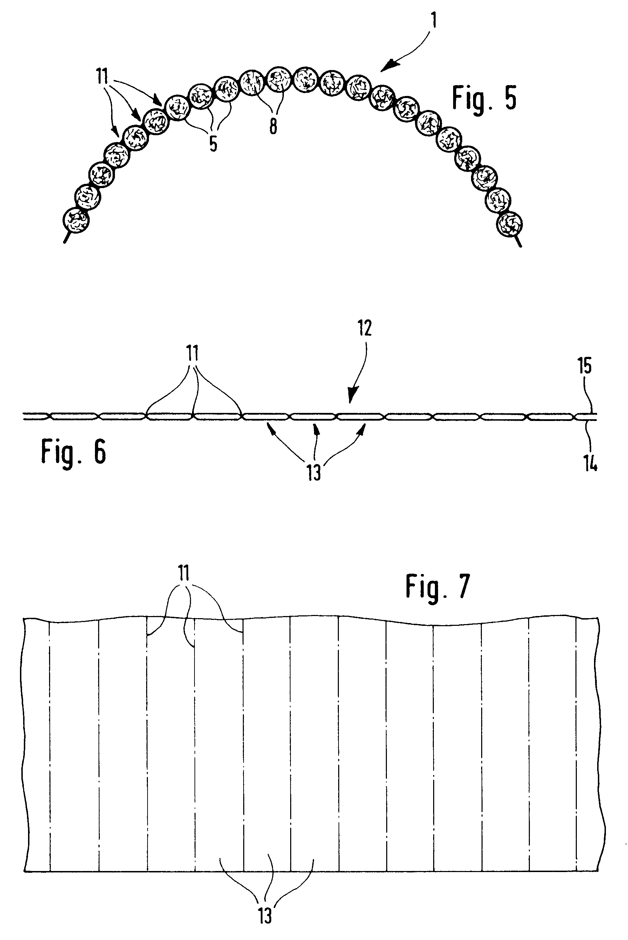

Jede Geweberöhre 5 ist mit ihren beiden benachbarten Geweberöhren an einander diametral entgegengesetzten Verbindungsstellen 11 verbunden, die, wie schon angedeutet, linienartig Mantellinien entlang verlaufen und sich über die gesamte Röhrenlänge L erstrecken. Dabei handelt es sich um eine feste, jedoch gelenkige Verbindung, so daß die Filtermatte 1 nicht nur eine plane Gestalt aufweist, sondern auch, wofür Fig. 5 ein Beispiel zeigt, gebogen werden kann. Dies ergibt eine größere Vielfalt der Einsatzmöglichkeiten der Filtermatte.

Es ist leicht vorstellbar, daß man zur Erhöhung der Filtrierwirkung auch mehrere solche Filtermatten 1 aufeinander legen kann, wobei die einander benachbarten Filtermatten sozusagen auf Lücke zueinander angeordnet werden können, d.h. um den Radius der Geweberöhren 5 versetzt zueinander sind. Die Filtermatte 1 kann auch im Schichtaufbau mit sonstigen Filtermaterialien kombiniert werden.

Prinzipiell können die Geweberöhren 5 einzeln hergestellt und im unbefüllten oder befüllten Zustand in geeigneter Weise beispielsweise durch Kleben oder Nähen miteinander verbunden werden. Beim bevorzugten Ausführungsbeispiel wird dagegen so vorgegangen, daß die Geweberöhren 5 miteinander verwoben sind. Die Gesamtheit der Geweberöhren 5, also die gesamte Filtermatte 1, wird dann, sieht man von dem eingefüllten Filtermaterial 2 und den Verschlußmitteln 8,9 ab, von einem einstückigen Gewebekörper 12 (Fig. 6 und 7) gebildet, der zwischen den von den Verbindungsstellen 11 gebildeten Verwebungsstellen doppellagig ist. Dabei handelt es sich bei dem Gewebekörper 12 um ein flächenhaftes Gebilde mit noch nicht aufgeweiteten Geweberöhren. Ein solcher Gewebekörper läßt sich praktisch in beliebiger Größe herstellen, wonach man den für den betreffenden Luftfilter benötigten Abschnitt abtrennen kann. Damit man das Filtermaterial 2 einfüllen und die Stopfen 8, 8a einstecken kann, werden die die Geweberöhren 5 ergebenden doppellagigen Bereiche 13 des Gewebekörpers 12 aufgeblasen.

Das Gewebe erstreckt sich also einstückig über die Verbindungsstellen 11 hinweg. Die Geweberöhren halten deshalb der Reißfestigkeit des Gewebes entsprechend fest zusammen. Dabei bildet das Gewebe gleichzeitig die Biegegelenke.

Diese Vorteile sind auch bei einer Variante vorhanden, die sich ebenfalls anhand der Fig. 6 und 7 erläutern läßt. Bei dieser Variante wird die Gesamtheit der Geweberöhren 5 aus zwei übereinander angeordneten Gewebelagen hergestellt, die im dem Durchmesser der Geweberöhren entsprechenden Abstand linienartig, insbesondere durch eine Naht oder durch Verkleben, miteinander verbunden werden. In den Fig. 6 und 7 würde es sich also um zwei über die gesamte Fläche der Filtermatte durchgehende Gewebelagen 14,15 handeln, die den Verbindungsstellen 11 entlang miteinander vernäht oder verklebt sind. Wiederum erhält man ein Flachgebilde, dessen die Geweberöhren ergebenden Bereiche vom Röhrenende her aufgeblasen werden, so daß das Filtermaterial und die Stopfen eingesetzt werden können.

**Patentansprüche**

1. Luftfilter mit einem insbesondere von Aktivkohle gebildeten Filtermaterial pulveriger, körniger od.dgl. Gestalt, das zwischen luftdurchlässigen Abdeckungen enthalten ist, dadurch gekennzeichnet, daß er von einer Reihe von beidenends durch Verschlußmittel (8, 8a) verschlossenen und mit dem Filtermaterial (2) befüllten Geweberöhren (5) aus einem die Luft durchlassenden, das Filtermaterial (2) jedoch zurückhaltenden Material gebildet wird, die parallel nebeneinander angeordnet und entlang von Mantellinien zu einer biegbaren Filtermatte (1) fest miteinander verbunden sind.

**2.** Luftfilter nach Anspruch 1, dadurch gekennzeichnet, daß die Geweberöhren (5) miteinander verwoben sind, so daß die Gesamtheit der Geweberöhren von einem einstückigen, beiderseits der Verwebungsstellen (11) doppellagigen Gewebekörper (12) gebildet wird.

**3.** Luftfilter nach Anspruch 1 , dadurch gekennzeichnet, daß die Gesamtheit der Geweberöhren (5) von zwei übereinander angeordneten Gewebelagen (14, 15) gebildet wird, die in dem Durchmesser der Geweberöhren (5) entsprechenden Abständen linienartig, insbesondere durch eine Naht oder durch Verkleben, miteinander verbunden sind.

**4.** Luftfilter nach einem der Ansprüche 1 bis 3, dadurch gekennzeichnet, daß die Geweberöhren (5) im befüllten Zustand eine im wesentlichen zylindrische Gestalt aufweisen.

**5.** Luftfilter nach einem der Ansprüche 1 bis 4, dadurch gekennzeichnet, daß die Geweberöhren (5) von einem textilen Gewebe insbesondere aus Naturfasern gebildet werden.

**6.** Luftfilter nach einem der Ansprüche 1 bis 5, dadurch gekennzeichnet, daß die Verschlußmittel von in die Geweberöhren (5) eingesteckten Stopfen (8; 8a) gebildet werden.

**7.** Luftfilter nach Anspruch 6, dadurch gekennzeichnet, daß die Stopfen (8; 8a) mit den Geweberöhren verklebt sind.

**8.** Luftfilter nach Anspruch 6 oder 7, dadurch gekennzeichnet, daß die Stopfen (8) voneinander unabhängige Einzelstopfen sind.

**9.** Luftfilter nach einem der Ansprüche 6 bis 8, dadurch gekennzeichnet, daß mindestens an einer Seite der Filtermatte (1) die Stopfen (8a) an einer sich über die Enden der Geweberöhren (5) erstreckenden Stopfenleiste (9) angeordnet sind.

**10.** Luftfilter nach einem der Ansprüche 1 bis 9, dadurch gekennzeichnet, daß die Verschlußmittel aus einem Naturstoff bestehen.

**11.** Luftfilter nach Anspruch 10, dadurch gekennzeichnet, daß die Verschlußmittel aus Naturfasern oder aus pappeartigem Material od.dgl. bestehen.

**12.** Luftfilter nach einem der Ansprüche 1 bis 11, dadurch gekennzeichnet, daß er mindestens eine unbefüllte und unverschlossene Geweberöhre (5) aufweist.

Fig. 1

Fig. 2

Fig. 3

Fig. 4

Fig. 5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2 063 095 (THE PLESSEY COMPANY LTD.) <br> * Seite 1, Zeile 32 - Zeile 73; Ansprüche 1-11; Abbildungen 1-5 * | 1-4 | B01D53/04 <br> B01D39/00 |
| Y | | 5,6,8, 10,11 | |
| | --- | | |
| Y | US-A-4 250 172 (MUTZENBERG ET AL.) <br> * Spalte 2, Zeile 20 - Zeile 22 * <br> * Spalte 2, Zeile 57 - Zeile 59; Ansprüche 1-20; Abbildung 2 * | 5,10,11 | |
| | --- | | |
| Y | US-A-3 243 942 (BURKE) <br> * Spalte 1, Zeile 35 - Zeile 37 * <br> * Spalte 3, Zeile 37 - Zeile 42; Abbildungen 4,6 * | 6,8,10 | |
| | --- | | |
| A | US-A-3 871 849 (SMITH ET AL.) <br> * Spalte 2, Zeile 6 - Zeile 26 * <br> * Spalte 3, Zeile 36 - Zeile 52; Abbildung 4 * | 1-5 | |
| | ----- | | **RECHERCHIERTE SACHGEBIETE (Int. Cl.5 )** <br><br> B01D |

Der vorliegende Recherchenbericht wurde für alle Patentansprüche erstellt

| Recherchenort | Abschlußdatum der Recherche | Prüfer |
|---|---|---|
| DEN HAAG | 18 SEPTEMBER 1992 | EIJKENBOOM T. |